# EUROPEAN PATENT APPLICATION

(11) **EP 1 406 176 A1**
(43) Date of publication of application: **07.04.2004**
(21) Application number: 02783667.5
(22) Date of filing: 27.11.2002
(51) Int. Cl.: G06F 13/00, H04N 5/64, G09G 3/20, H04L 12/54, H04L 12/58

(54) **WEARING INFORMATION NOTIFYING UNIT**

(30) Priority: 27.11.2001 JP 2001360546; 27.11.2001 JP 2001360548
(71) Applicant: MATSUSHITA ELECTRIC INDUSTRIAL CO., LTD., Kadoma-shi, Osaka 571-8501 (JP)
(72) Inventor: NAITO, Eiichi, Kyotanabe-shi, Kyoto 610-0341 (JP); OZAWA, Jun, Nara-shi, Nara 631-0005 (JP); AZUMA, Takeo, Nara-shi, Nara 631-0841 (JP); UOMORI, Kenya, Hirakata-shi, Osaka 573-0073 (JP)
(74) Representative: Grünecker, Kinkeldey, Stockmair & Schwanhäusser Anwaltssozietät
(86) International application number: PCT/JP2002/012397
(87) International publication number: WO 2003/046732

(57) **Abstract**

When a user wears a headset (**12**), a small display (**107**) is provided in front of an eye of the user. A main component (**11**) communicates with an external device to receive information, such as an electronic mail. The main component (**11**) extracts a portion of the received information, e.g., data about a sender, and transmits the extracted portion to a headset (**12**). The headset (**12**) displays the received information on the small display (**107**).

## Description

### Technical Field

The present invention relates to a wearable information notifying device which is designed to be wearable for a user and which can notify the user of information, e.g., information about arrival of a mail, etc., without imposing a burden on the user.

### Background Art

In recent years, transmission/reception of mails, distribution of electronic newspapers, and the like, have been actively carried out using mobile terminals. When certain information is distributed to a mobile terminal of a user, the user is notified about it by an arrival sound or vibration even during the time when the user is enjoying a chat with another person in an actual world or even when the user is in the midst of an important business meeting. The notified user can take out the mobile terminal to check the content of the distributed information.

However, if the user hears an arrival sound in the midst of a conversation with a person and takes out his/her mobile terminal to check the content of the distributed information, such a manner sometimes makes the person uncomfortable. If an arrival sound is emitted during an important meeting, the user needs to take out a mobile terminal in order to check the content of a mail even though the mail is not important, and such labor troubles the user. Although such troublesome labor may be removed by assigning different arrival sounds to different mail senders, such a method is not much effective because it is still necessary to take out the mobile terminal in order to check the content of the information.

One possible method for solving the above problem is to fixedly provide a small display in front of an eye of the user and display information on the small display when a mail, or the like, is arrived. With such a method, the user can confirm information about arrival of a mail without being noticed by other people.

Patent Publication 1 discloses a goggle-type headset which has a small display. Patent Publication 2 discloses a technique of displaying received information on a small display worn by a user.
(Patent Publication 1) Japanese Unexamined Patent Publication No. 10-322624
(Patent Publication 2) Japanese Unexamined Patent Publication No. 2001-101096

### --- Problems to be solved ---

However, a small display which can be fixedly provided in front of an eye generally has poor display performance, i.e., is not suitable for display of a large amount of information. Furthermore, in the case where a small display is actually used, it is difficult for a user to instantly recognize displayed information because of the nature of human eyes.

An objective of the present invention, which is established in view of the above problems, is to provide received information in such a manner that a user can instantly determine the degree of importance of the received information in a wearable information notifying device including a headset which has a small display that can be provided in front of an eye of a wearer.

### Disclosure of Invention

A wearable information notifying device of the present invention includes: a headset having a small display which can be provided in front of an eye of a wearer; an information reception section for communicating with an external device to receive information; and an information extraction section for extracting a portion of the information received by the information reception section which is to be displayed on the small display.

With such a structure, a portion of the information received by the information reception section, which is extracted by the information extraction section, is displayed on the small display provided in front of the eye of the wearer. Thus, the user can instantly perceive the content of the information without being noticed by other people before the user confirms the entire information.

The wearable information notifying device of the present invention preferably includes a display for displaying the information received by the information reception section.

The wearable information notifying device of the present invention preferably includes: a transmission section for transmitting an output of the information extraction section by wireless; and a reception section for receiving a transmission from the transmission section to output the received transmission to the small display.

The information extraction section of the wearable information notifying device of the present invention preferably extracts information about a sender of the information received by the information reception section.

The information extraction section of the wearable information notifying device of the present invention preferably extracts information about the degree of importance of the information received by the information reception section.

The information extraction section of the wearable information notifying device of the present invention preferably extracts a keyword picked up from a sentence included in the information received by the information reception section.

Further, the information extraction section preferably outputs the extracted information together with predetermined color information added thereto.

The information extraction section of the wearable information notifying device of the present invention preferably extracts color classification information which is set for a character string included in the information received by the information reception section.

In the wearable information notifying device of the present invention, the headset preferably includes an earphone, and the wearable information notifying device preferably includes a sound notifying section for outputting a sound signal to the earphone based on the information output from the information extraction section.

In the wearable information notifying device of the present invention, the headset preferably includes a vibrating section for providing a vibration, and the wearable information notifying device preferably includes a vibratory notification section for outputting a vibration signal to the vibrating section based on the information output from the information extraction section.

The headset of the wearable information notifying device of the present invention preferably includes a display control section for controlling the display mode of the small display according to a given control signal.

The display control section preferably controls the brightness of the small display or controls whether or not to perform display on the small display.

The wearable information notifying device preferably includes an environment detection section for detecting an environmental state around the headset and supplying the control signal to the display control section according to the detected environmental state. Further, the environment detection section preferably detects the brightness of surroundings as the environmental state.

The wearable information notifying device preferably includes an environmental information reception section for receiving environmental information which represents an environmental state around the headset and supplying the control signal to the display control section according to the received environmental information. Further, the environmental information reception section preferably receives the velocity of a car driven by the human as the environmental information.

The headset of the wearable information notifying device of the present invention preferably includes a driving mechanism for shifting the small display between a position in front of the eye of the wearer and a position not in front of the eye of the wearer, and a drive control section for controlling an operation of the driving mechanism based on the information output from the information extraction section.

The wearable information notifying device includes an environmental information reception section for receiving environmental information which represents an environmental state around the headset and supplying the received environmental information to the drive control section, wherein the drive control section controls the operation of the driving mechanism while additionally considering the environmental information.

A wearable information notifying device of the present invention includes: a headset having a small display which can be provided in front of an eye of a wearer; an information reproduction section for reproducing a media in which information is stored; and an information extraction section for extracting a portion of the information reproduced by the information reproduction section which is to be displayed on the small display.

### Brief Description of Drawings

Figure **1** shows an exterior of a wearable information notifying device according to embodiment 1 of the present invention.
Figure **2** shows a user who wears the wearable information notifying device of Figure **1.**
Figure **3** is a functional block diagram of the wearable information notifying device of Figure **1.**
Figure **4** is a flowchart showing an operation of the wearable information notifying device of Figure **1.**
Figure **5** is a display example which is obtained in embodiment 1.
Figure **6** shows an exterior of a wearable information notifying device according to embodiment 2 of the present invention.
Figure **7** shows a user who wears the wearable information notifying device of Figure **6.**
Figure **8** is a functional block diagram of the wearable information notifying device of Figure **6.**
Figure **9** is a flowchart showing an operation of the wearable information notifying device of Figure **6.**
Figure **10** shows an exterior of a wearable information notifying device according to embodiment 3 of the present invention.
Figure **11** shows a user who wears the wearable information notifying device of Figure **10**.
Figure **12** is a functional block diagram of the wearable information notifying device of Figure **10**.
Figure **13** is a flowchart showing an operation of the wearable information notifying device of Figure **10**.
Figure **14** shows an exterior of a wearable information notifying device according to embodiment 4 of the present invention.
Figure **15** shows a user who wears the wearable information notifying device of Figure **14.**
Figure **16** is a functional block diagram of the wearable information notifying device of Figure **14.**
Figure **17** is a flowchart showing an operation of the wearable information notifying device of Figure **14**.
Figure **18** is a display example which is obtained in embodiment 4.
Figure **19** is a functional block diagram of a wearable information notifying device according to embodiment 5 of the present invention.
Figure **20** is a functional block diagram of a wearable information notifying device according to embodiment 6 of the present invention.
Figure **21** is an example of a table stored in a display control section in Figure **20**.
Figure **22** is a functional block diagram of another example of the wearable information notifying device according to embodiment 6 of the present invention.
Figure **23** shows an exterior of a headset which has a driving mechanism.
Figure **24** is a functional block diagram of a wearable information notifying device which includes the headset of Figure **23**.
Figure **25** shows an exterior of a headset which has a slide mechanism.
Figure **26** is a functional block diagram showing a structure of a wearable information notifying device according to embodiment 7 of the present invention.
Figure **27** is a display example of a small display in the wearable information notifying device of Figure **26**.
Figure **28** is a functional block diagram of another example of the wearable information notifying device according to embodiment 7 of the present invention.
Figure **29** shows an exterior of a small display according to embodiment 8 of the present invention, to which fixing means is attached.
Figure **30** shows an exterior of a headset according to embodiment 8 of the present invention, which uses a vertical supporting bar.
Figure **31** shows an exterior of a headset according to embodiment 9 of the present invention.
Figure **32** shows a user who wears a wearable information notifying device including the headset of Figure **31.**
Figure **33** is a functional block diagram of a wearable information notifying device including the headset of Figure **31**.
Figure **34** shows display examples of a small display of the wearable information notifying device of Figure **33.**
Figure **35** shows an example of image capturing which is performed using the headset of Figure **31**.

### Best Mode for Carrying Out the Invention

Hereinafter, embodiments of the present invention will be described with reference to the drawings.

### (Embodiment 1)

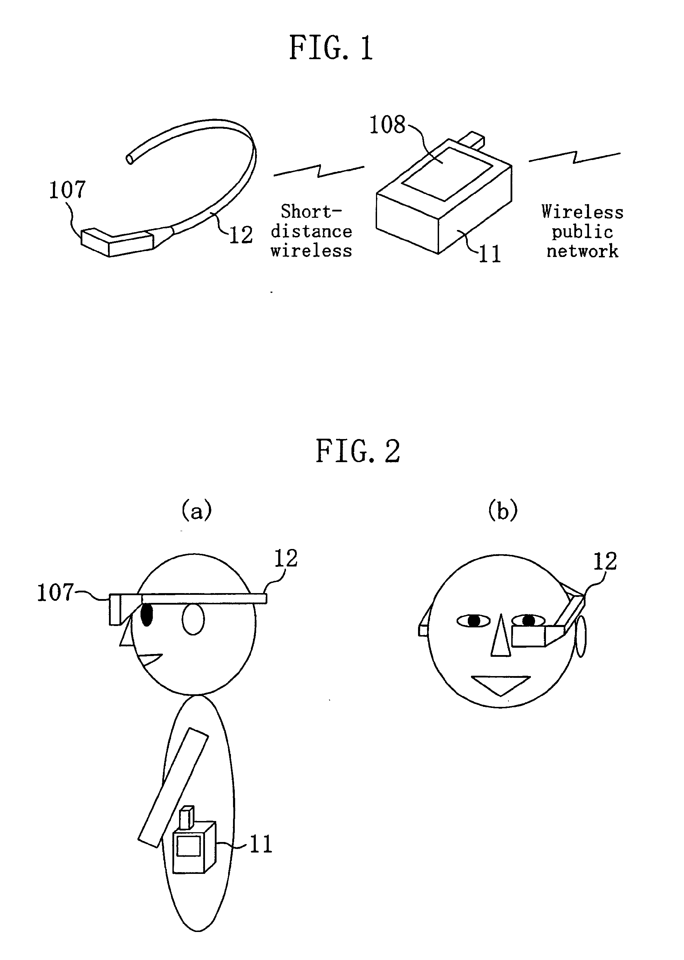

Figure **1** shows an exterior of a wearable information notifying device according to embodiment 1 of the present invention. In Figure **1,** reference numeral **11** denotes a main component which communicates with an external device to receive information, and reference numeral **12** denotes a headset which is to be worn by a user. The main component **11** has a large display **108** having a size similar to that of a cellular phone, or the like. The headset **12** has a shape such that it is attached substantially horizontally at the head of the user by a flexible headband (Katyusha). The headset **12** has a small display **107** at one end of the headband.

Figure **2** shows a user who wears the wearable information notifying device of Figure **1.** In Figure **1,** part **(a)** is a side view, and part **(b)** is a front view. When the user wears the headset **12,** the small display **107** is placed in front of an eye of the wearer so as to be within the view field of the wearer. The main component **11** is held at a belt, in a pocket, or the like, of the user.

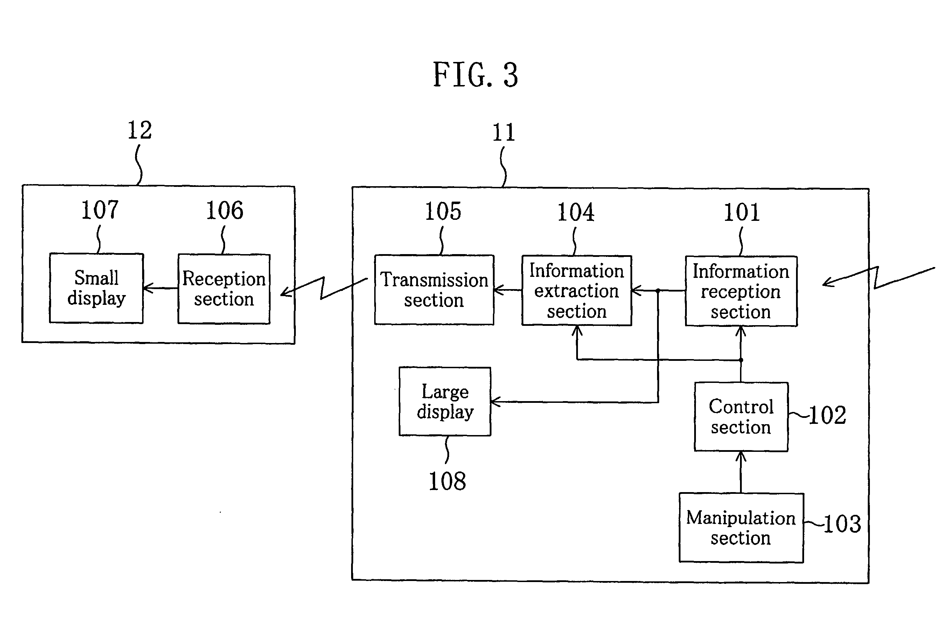

Figure **3** is a functional block diagram of the wearable information notifying device of Figure **1**. In Figure **3,** reference numeral **101** denotes an information reception section for communicating with an external device to receive information; reference numeral **102** denotes a control section for controlling the information reception section; reference numeral **103** denotes a manipulation section for receiving a manipulation of the control section **102** from a user; reference numeral **104** denotes an information extraction section for extracting a part of the information received by the information reception section **101** to be displayed on the small display **107**; reference numeral **105** denotes a transmission section for transmitting the information extracted by the information extraction section **104** to the headset **12**; and reference numeral **106** denotes a reception section for receiving information from the main component **11**.

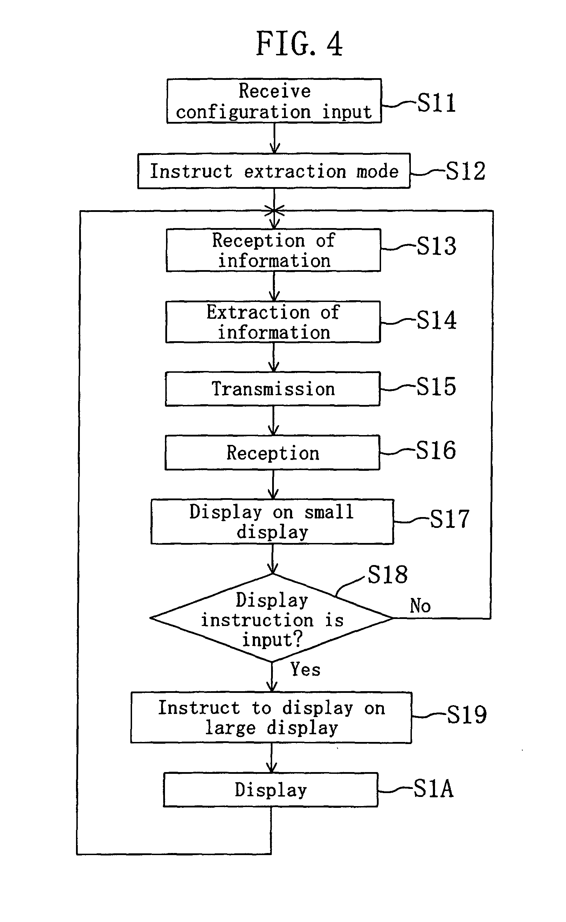

An operation of the wearable information notifying device according to this embodiment which has the above-described structure is described with reference to the flowchart of Figure **4**. Here, we consider a case where the information reception section **101** is connected to a wireless public network and receives an electronic mail as externally supplied information.

### [Step S11]

The manipulation section **103** receives from a user a configuration input concerning particulars to be displayed on the small display **107**. The particulars which can be input by the user include: selection of the mail attribute to be displayed ("sender", "title", "degree of importance", "keyword"); the condition for an attribute value of the mail attribute to be displayed; the correspondence between the attribute value of the mail attribute and the character color or background color; and the on/off of a flashing operation in the display. For example, the user can determine the configuration such that: the "keyword" is displayed as the mail attribute; characters are displayed in "red" if the "keyword" includes "C"; and the display is carried out according to the "flashing operation". Alternatively, characters may be displayed in, for example, "green" when a mail from a specified user is received. Characters may be displayed in, for example, "blue" when an important keyword is included in the title or information. Characters may be displayed in, for example, "yellow" when a mail whose degree of importance is set by a sender is received. Still alternatively, the sender may designate the color of characters to be displayed.

### [Step S12]

Based on the input at step S11, the control section **102** instructs the information reception section **101** to start receiving information and instructs the information extraction section **104** about the mode for extracting information.

### [Step S13]

The information reception section **101** communicates with an external mail server (not shown) through the wireless public network at a predetermined time interval to receive a newly-arrived electronic mail. Then, the information reception section **101** stores the received electronic mail and sends it to the information extraction section **104.**

### [Step S14]

Based on the input at step S11, the information extraction section **104** extracts the sender, title, degree of importance, or keyword, from the information received by the information reception section **101**, and sends to the transmission section **105** a display signal including the extracted information and the display attributes concerning the display color and flashing operation.

### [Step S15]

The transmission section **105** transmits the display signal extracted at step S14 to the headset **12** by a short-distance wireless.

### [Step S16]

The reception section **106** receives the display signal transmitted at step S15 by a short-distance wireless.

### [Step S17]

The reception section **106** reproduces the display signal received at step S16 through the small display **107.**

### [Step S18]

The manipulation section **103** receives from the user an instruction to display on the large display **108** the mail received and stored at step S13. If such an instruction is made within a predetermined time period, the process proceeds to step S19. If not, the process returns to step S13.

### [Step S19]

Based on the instruction received at step S18, the control section **102** instructs the information reception section **101** to perform a display on the large display **108**.

### [Step S1A]

The information reception section **101** displays on the large display **108** a list of mails received and stored at step S13. When the list is displayed, the display can be changed to the content of a selected mail, and when the content of the selected mail is displayed, the display can be changed to the list, by a manipulation of the user. If a manipulation of the user is not made within a predetermined time period, the display shown on the large display **108** is deleted, and the process returns to step S13.

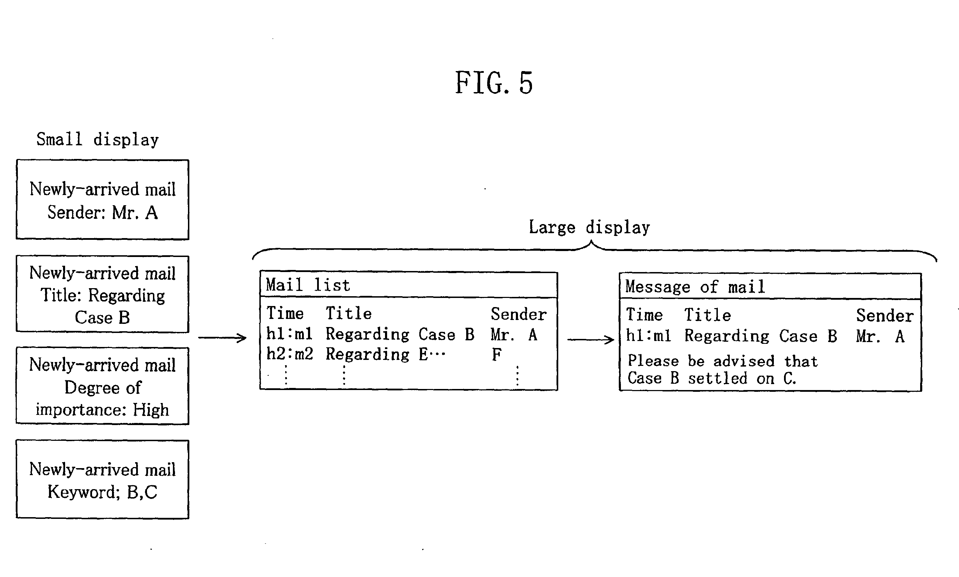

Figure **5** shows display examples of the small display **107** and the large display **108** which result from the above-described operation. In Figure **5**, arrival of a mail and a mail attribute selected by the user (any of "sender", "title", "degree of importance", and "keyword") are displayed on the small display **107**. Thereafter, a mail list and the content of a mail are displayed on the large display **108** according to a manipulation of the user. Alternatively, only a color may be displayed on the small display, or the display may be flashed.

As described above, according to this embodiment, arrival of a mail and a portion of the content of the mail are displayed on the display provided in front of an eye of the user, whereby the user can be notified about arrival of the mail without taking out the main component.

Furthermore, by using color information, the user can perceive general matters of the content of a received mail without carefully watching the small display.

In another possible application, when a user viewing information on the large display reads an important piece of information, information indicating the degree of importance of the piece of information is displayed on the small display. That is, when the user carefully watching the large display reaches an important piece of information, color information, or the like, is displayed on the small display, whereby the user's attention can be called to the piece of information while keeping the user carefully watching the large display.

### (Embodiment 2)

In embodiment 1 described above, information is notified using a small display, whereas in embodiment 2, information is further notified by a sound using an earphone.

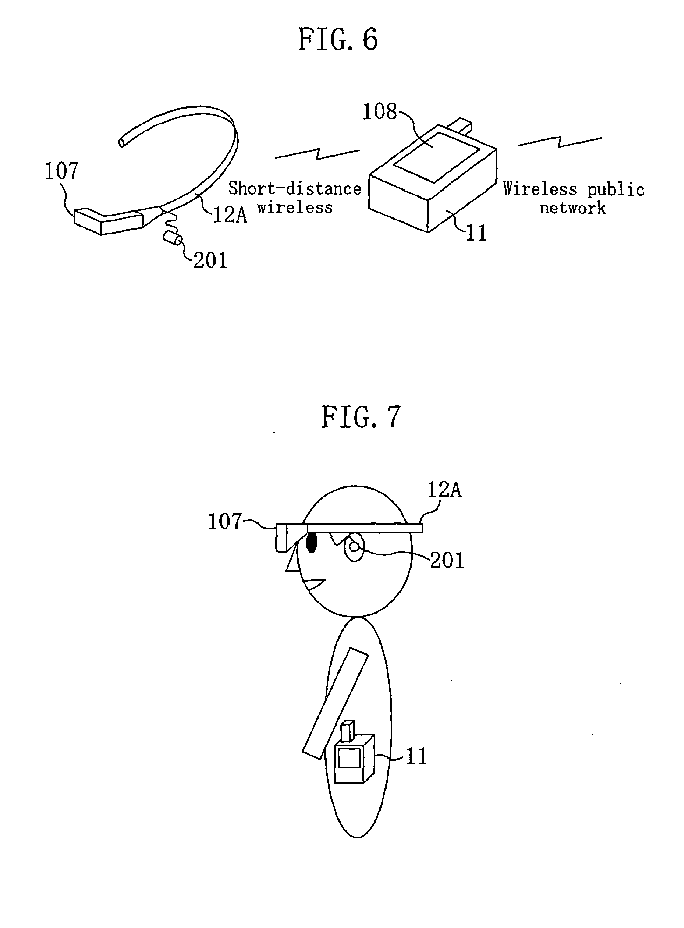

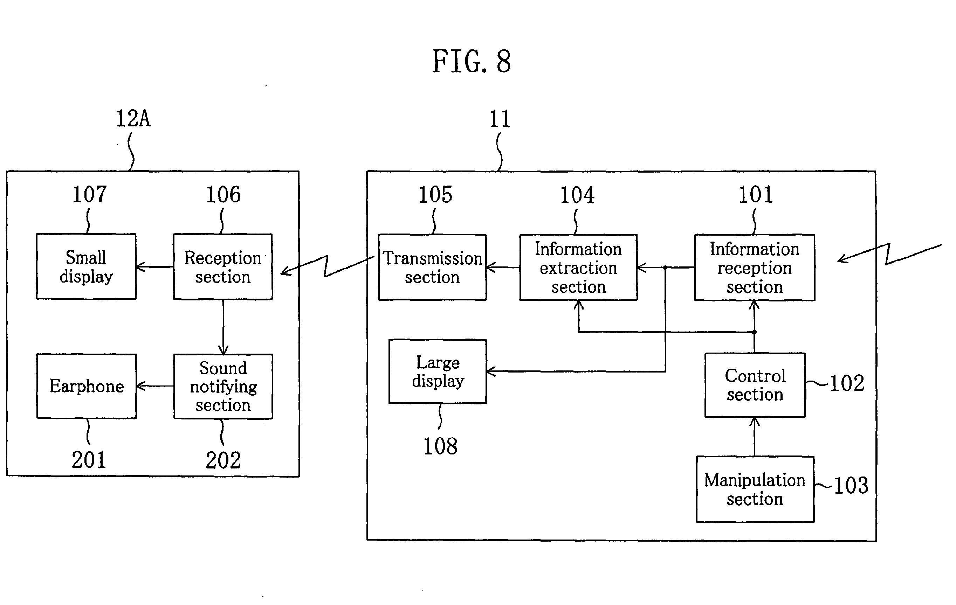

Figure **6** shows an exterior of a wearable information notifying device according to this embodiment. Figure **7** shows a user who wears the wearable information notifying device of Figure **6**. Figure **8** is a functional block diagram of the wearable information notifying device of Figure **6**. In Figures **6** through **8**, like elements are denoted by like reference numerals used in Figures **1** through **3** of embodiment 1, and therefore, detailed descriptions thereof are herein omitted. Embodiment 2 is different from embodiment 1 in that a headset **12A** includes an earphone **201,** which is put in the ear, and a sound notifying section **202** which outputs a sound signal to the earphone **201** based on information output from the information extraction section **104**.

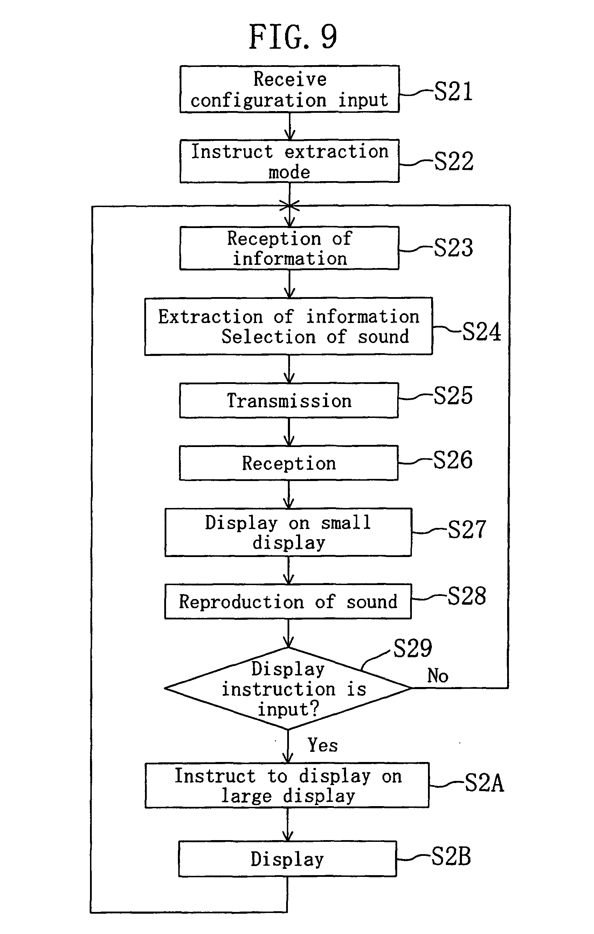

An operation of the wearable information notifying device according to this embodiment which has the above-described structure is described with reference to the flowchart of Figure **9**. Here also, we consider a case where the information reception section **101** is connected to a wireless public network and receives an electronic mail as externally supplied information, as described in embodiment 1.

### [Step S21]

The manipulation section **103** receives from a user a configuration input concerning particulars to be displayed on the small display 107 and a sound to be reproduced through the earphone **201.** The particulars which can be input by the user include: selection of the mail attribute to be displayed ("sender", "title", "degree of importance", "keyword"); the condition for an attribute value of the mail attribute to be displayed; the correspondence between the attribute value of the mail attribute and the character color or background color; and the on/off of a flashing operation in the display; and additionally, the correspondence between the attribute value of the mail attribute and the sound; and the setting of the volume or volume transition. For example, the user can determine the configuration such that: the "keyword" is displayed as the mail attribute; characters are displayed in "red" if the "keyword" includes "C"; the display is carried out according to the "flashing operation"; and "effect sound H" is reproduced "at a gradually increasing volume".

### [Step S22]

Based on the input at step S21, the control section **102** instructs the information reception section **101** to start receiving information and instructs the information extraction section **104** about the mode for extracting information.

### [Step S23]

The information reception section **101** communicates with an external mail server (not shown) through the wireless public network at a predetermined time interval to receive a newly-arrived electronic mail. Then, the information reception section **101** stores the received electronic mail and sends it to the information extraction section **104**.

### [Step S24]

Based on the input at step S21, the information extraction section **104** extracts the sender, title, degree of importance, or keyword, from the information received by the information reception section **101**, and sends to the transmission section **105** a display signal including the extracted information and the display attributes concerning the display color and flashing operation. Furthermore, the information extraction section **104** selects from among a plurality of sounds previously stored in the main component **11 a** sound which is set so as to correspond to the extracted information, and sends the selected sound as a reproduction signal to the transmission section **105**.

### [Step S25]

The transmission section **105** transmits the display signal and reproduction signal extracted at step S24 to the headset **12** by a short-distance wireless.

### [Step S26]

The reception section **106** receives the display signal and reproduction signal transmitted at step S25 by a short-distance wireless.

### [Step S27]

The reception section **106** reproduces the display signal received at step S26 through the small display **107.** Furthermore, the reception section **106** sends the reproduction signal to the sound notifying section **202**.

### [Step S28]

The sound notifying section **202** reproduces the reproduction signal through the earphone **201**.

### [Step S29]

The manipulation section **103** receives from the user an instruction to display on the large display **108** the mail received and stored at step S23. If such an instruction is made within a predetermined time period, the process proceeds to step S2A. If not, the process returns to step S23.

### [Step S2A]

Based on the instruction received at step S29, the control section **102** instructs the information reception section **101** to perform a display on the large display **108**.

### [Step S2B]

The information reception section **101** displays on the large display **108** a list of mails received and stored at step S23. When the list is displayed, the display can be changed to the content of a selected mail, and when the content of the selected mail is displayed, the display can be changed to the list, by a manipulation of the user. If a manipulation of the user is not made within a predetermined time period, the display on the large display **108** is deleted, and the process returns to step S23.

As described above, according to this embodiment, arrival of a mail and a portion of the content of the mail are displayed on the small display provided in front of an eye of the user, and in addition, arrival of the mail is notified to the user by a sound emitted through the earphone, whereby the user can surely be notified about arrival of the mail even when the user fails to notice the display on the small display.

### (Embodiment 3)

In embodiment 2 described above, information is notified using a sound in addition to a display on a small display, whereas in embodiment 3, information is notified by a vibration in place of the sound.

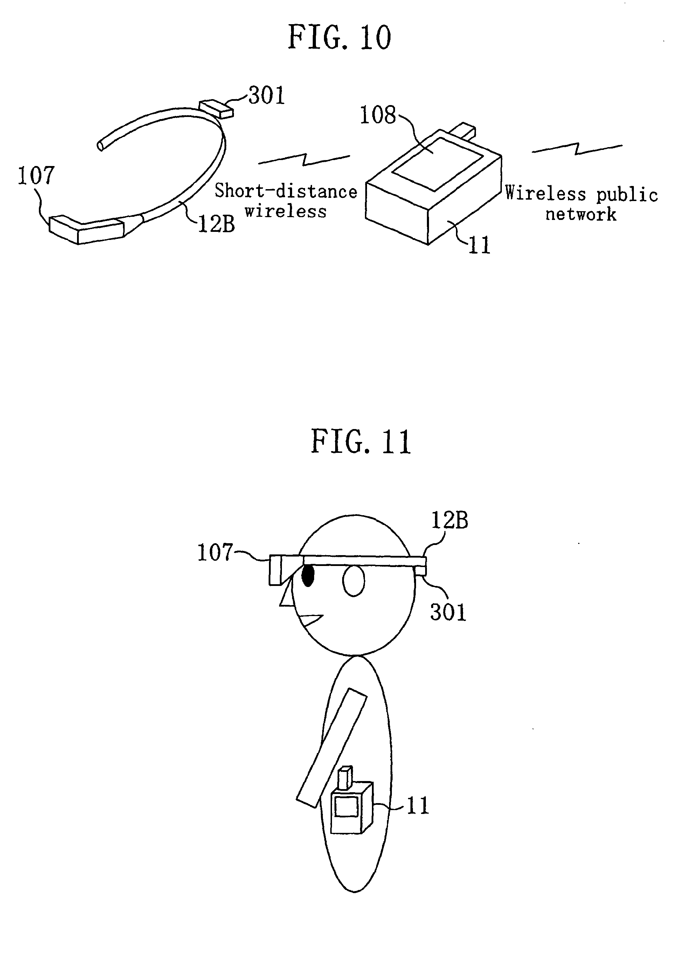

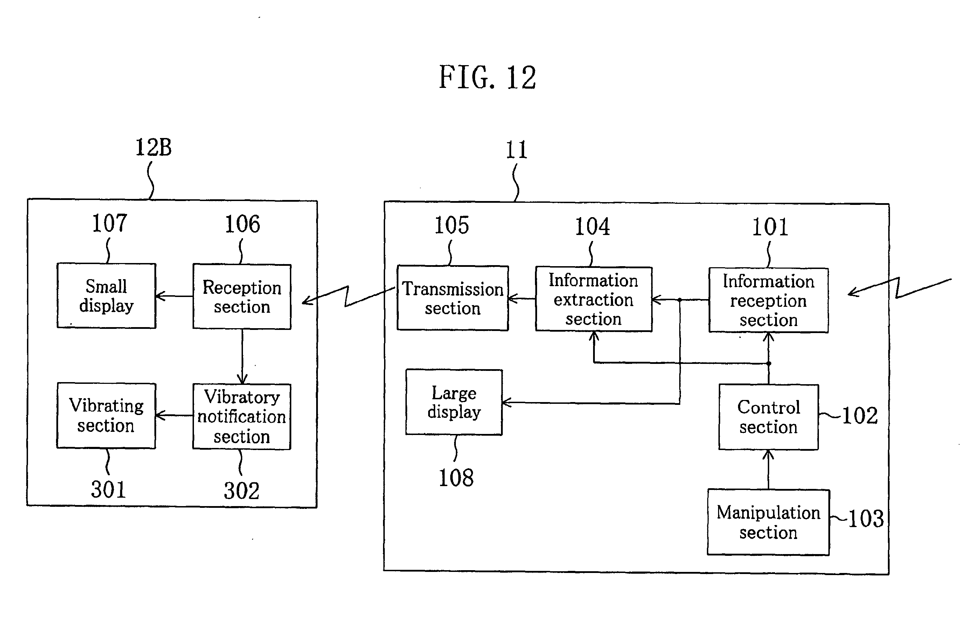

Figure **10** shows an exterior of a wearable information notifying device according to this embodiment. Figure **11** shows a user who wears the wearable information notifying device of Figure **10**. Figure **12** is a functional block diagram of the wearable information notifying device of Figure **10**. In Figures **10** through **12**, like elements are denoted by like reference numerals used in Figures **1** through **3** of embodiment 1, and therefore, detailed descriptions thereof are herein omitted. Embodiment 3 is different from embodiment 1 in that a headset **12B** includes a vibrating section **301** for providing a vibration to the head and a vibratory notification section **302** for driving the vibrating section **301** according to a vibration signal based on information output from the information extraction section **104**.

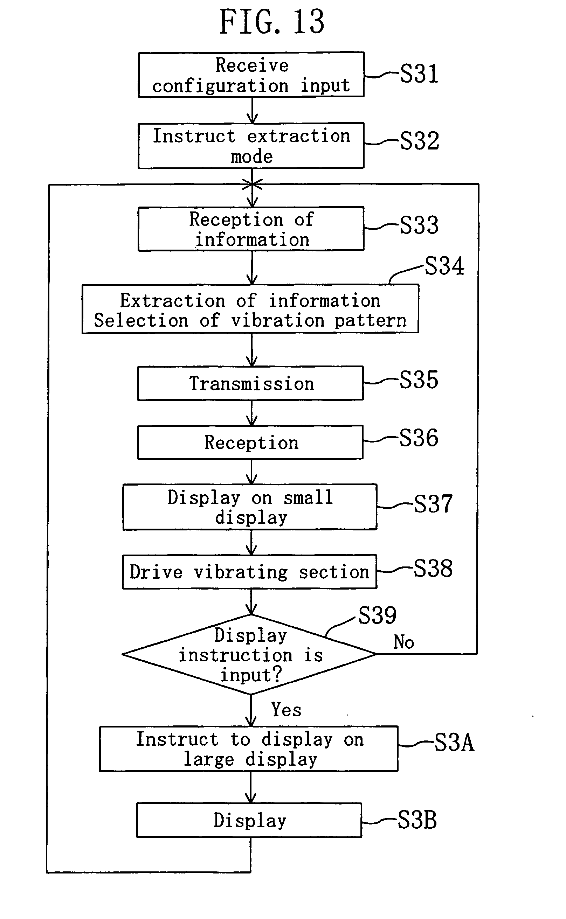

An operation of the wearable information notifying device according to this embodiment which has the above-described structure is described with reference to the flowchart of Figure **13**. Here also, we consider a case where the information reception section **101** is connected to a wireless public network and receives an electronic mail as externally supplied information, as described in embodiment 1.

### [Step S31]

The manipulation section **103** receives from a user a configuration input concerning particulars to be displayed on the small display **107** and a vibration control pattern used at the vibrating section **301**. The particulars which can be input by the user include: selection of the mail attribute to be displayed ("sender", "title", "degree of importance", "keyword"); the condition for an attribute value of the mail attribute to be displayed; the correspondence between the attribute value of the mail attribute and the character color or background color; and the on/off of a flashing operation in the display; and additionally, the correspondence between the attribute value of the mail attribute and the vibration pattern. For example, the user can determine the configuration such that: the "keyword" is displayed as the mail attribute; characters are displayed in "red" if the "keyword" includes "C"; the display is carried out according to the "flashing operation"; and a vibration is made according to "vibration pattern J".

### [Step S32]

Based on the input at step S31, the control section **102** instructs the information reception section **101** to start receiving information and instructs the information extraction section **104** about the mode for extracting information.

### [Step S33]

The information reception section **101** communicates with an external mail server (not shown) through the wireless public network at a predetermined time interval to receive a newly-arrived electronic mail. Then, the information reception section **101** stores the received electronic mail and sends it to the information extraction section **104**.

### [Step S34]

Based on the input at step S31, the information extraction section **104** extracts the sender, title, degree of importance, or keyword, from the information received by the information reception section **101**, and sends to the transmission section **105** a display signal including the extracted information and the display attributes concerning the display color and flashing operation. Furthermore, the information extraction section **104** selects from among a plurality of vibration patterns previously stored in the main component **11** a vibration pattern which is set so as to correspond to the extracted information, and sends the selected vibration pattern as a vibration signal to the transmission section **105.**

### [Step S35]

The transmission section **105** transmits the display signal and vibration signal extracted at step S34 to the headset **12** by a short-distance wireless.

### [Step S36]

The reception section **106** receives the display signal and vibration signal transmitted at step S35 by a short-distance wireless.

### [Step S37]

The reception section **106** reproduces the display signal received at step S36 through the small display **107**. Furthermore, the reception section **106** sends the vibration signal to the vibratory notification section **302**.

### [Step S38]

The vibratory notification section **302** drives the vibrating section **301** to vibrate according to the vibration signal.

### [Step S39]

The manipulation section **103** receives from the user an instruction to display on the large display **108** the mail received and stored at step S33. If such an instruction is made within a predetermined time period, the process proceeds to step S3A. If not, the process returns to step S33.

### [Step S3A]

Based on the instruction received at step S39, the control section **102** instructs the information reception section **101** to perform a display on the large display 108.

### [Step S3B]

The information reception section **101** displays on the large display **108** a list of mails received and stored at step S33. When the list is displayed, the display can be changed to the content of a selected mail, and when the content of the selected mail is displayed, the display can be changed to the list, by a manipulation of the user. If a manipulation of the user is not made within a predetermined time period, the display on the large display **108** is deleted, and the process returns to step S33.

As described above, according to this embodiment, arrival of a mail and a portion of the content of the mail are displayed on the small display provided in front of an eye of the user, and in addition, arrival of the mail is notified to the user by a vibration given to the head of the user, whereby the user can surely be notified about arrival of the mail even in a situation where confirmation by a sound is difficult.

In embodiments 1-3, reception of information is achieved through the wireless public network. However, according to the present invention reception of information may be achieved through a fixed public network, a television broadcast, a radio broadcast, or other methods. Further, a mail is received as information in embodiments 1-3, but according to the present invention, other information, such as a news program, a program table, etc., may be received. Furthermore, a communication between the main component and the headset is established by a short-distance wireless in embodiments 1-3, but according to the present invention, the communication may be established through other communication means, such as a wired communication, an infrared communication, etc. Further still, the information extraction section is provided at the main component in embodiments 1-3, but according to the present invention, the information extraction section may be provided at the headset.

### (Embodiment 4)

In embodiments 1-3 described above, information to be notified is externally-supplied information. However, in embodiment 4, information stored in a medium which is inserted in a main component of the information notifying device can be notified.

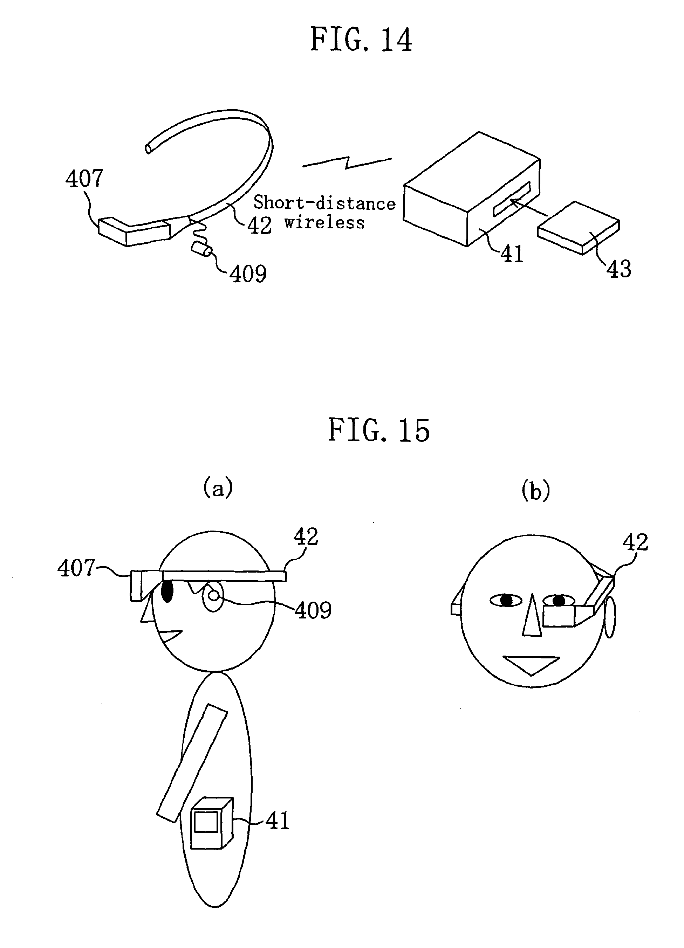

Figure **14** shows an exterior of a wearable information notifying device according to this embodiment. In Figure **14,** reference numeral **41** denotes a main component which reads information from a recording medium **43,** such as a DVD, or the like. Reference numeral **42** denotes a headset which is to be worn by a user. The headset **42** has the same appearance as that of the headset **12A** shown in Figure **6,** i.e., has a shape such that it is attached substantially horizontally at the head of the user by a flexible headband (Katyusha). The headset **42** has a small display **407** at one end of the headband. Further, the headset **42** has an earphone **409** which is to be put in the ear of the user.

Figure **15** shows the wearable information notifying device of Figure **14** which is worn by a user. When the user wears the headset **42**, the small display **407** is placed in front of an eye of the wearer so as to be within the view field of the wearer. The main component **41** is held at a belt, in a pocket, or the like, of the user.

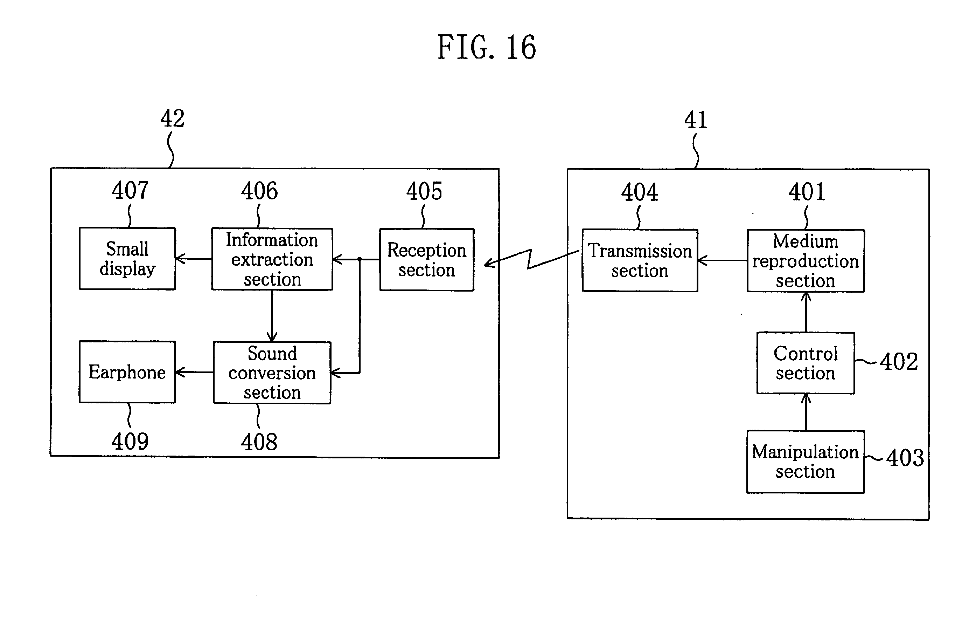

Figure **16** is a functional block diagram of the wearable information notifying device of Figure **14**. In Figure **16**, reference numeral **401** denotes a medium reproduction section for reproducing information stored in the medium **43;** reference numeral **402** denotes a control section for controlling the medium reproduction section **401;** reference numeral **403** denotes a manipulation section which receives a manipulation for the control section **402** from a user; reference numeral **404** denotes a transmission section for transmitting information reproduced by the medium reproduction section **401** to the headset **42**; reference numeral **405** denotes a reception section for receiving information from the main component **41**; reference numeral **406** denotes an information extraction section for extracting a portion of the information received by the reception section **405** for display on the small display **407**; and reference numeral **408** denotes a sound conversion section for converting the information received by the reception section **405** to a sound.

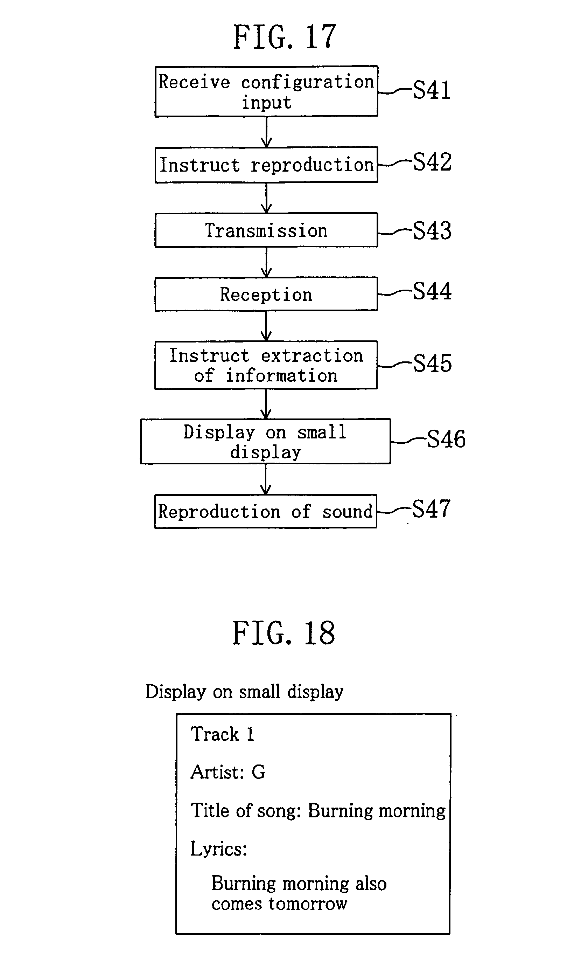

An operation of the wearable information notifying device according to this embodiment which has the above-described structure is described with reference to the flowchart of Figure **17**. Here, we consider a case where the medium reproduction section **401** reproduces music and song data recorded on a SD (Secure Disk), or the like.

### [Step S41]

The manipulation section **403** receives from a user a configuration input concerning particulars to be displayed on the small display **407**. The particulars which can be input by the user include selection of whether or not to display each of the song attributes ("track number", "artist name", "song name", "lyrics"). The manipulation section **403** receives a control manipulation, such as start/stop of reproduction, etc., from the user.

### [Step S42]

The control section **402** instructs the medium reproduction section **401** to start reproduction based on the input made at step S41.

### [Step S43]

The transmission section **404** transmits the information reproduced at step S42 to the headset **42** by a short-distance wireless.

### [Step S44]

The reception section **405** receives the information transmitted at step S43 through the short-distance wireless.

### [Step S45]

The reception section **405** sends the information received at step S44 to the information extraction section **406** and the sound conversion section **408**.

### [Step S46]

The information extraction section **406** extracts from the information received at step S44 a piece of information to be displayed, and displays the extracted information on the small display **407.** Figure **18** is a display example shown on the small display **407**.

### [Step S47]

The sound conversion section **408** extracts sound information from the information received at step S44. The sound conversion section **408** then converts the extracted information to a sound signal and reproduces the sound signal through the earphone **409**.

As described above, according to this embodiment, a portion of information stored in a medium is displayed on a small display provided in front of an eye of a user, whereby the user can easily confirm additional information which is provided when the user reproduces the medium.

In this embodiment, a communication between the main component and the headset is established by a short-distance wireless, but according to the present invention, the communication may be established through other communication means, such as wired communication means, infrared communication means, etc.

### (Embodiment 5)

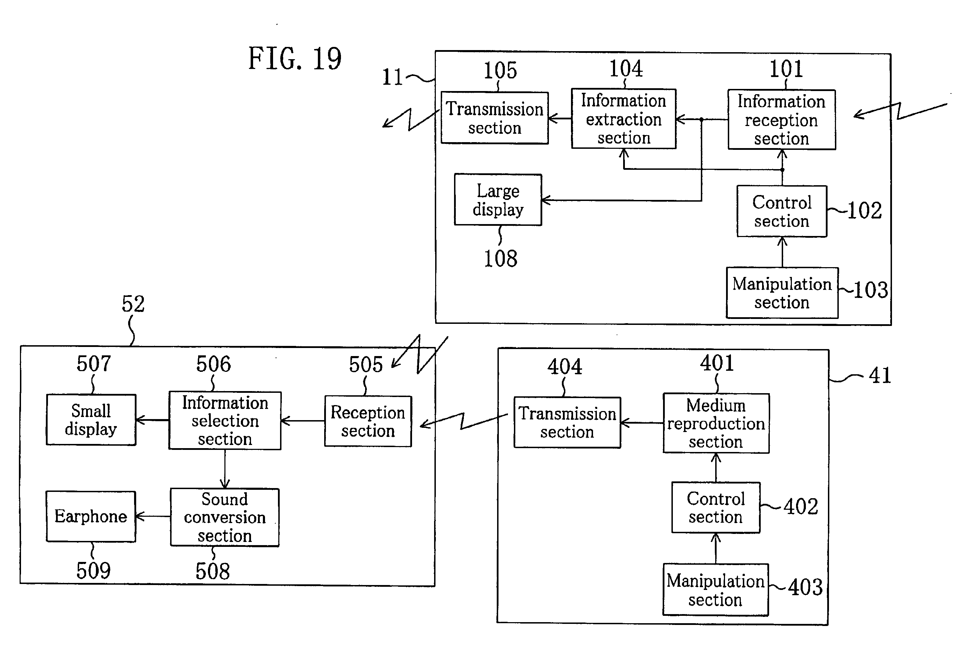

In embodiment 5, information received from a plurality of devices are selectively displayed. Figure **19** is a functional block diagram of a wearable information notifying device according this embodiment. In Figure **19**, like elements are denoted by like reference numerals used in Figures **3** and **16**, and therefore, detailed descriptions thereof are herein omitted. In the headset **52**, reference numeral **505** denotes a reception section for receiving information from the main components **11** and **41**; reference numeral **506** denotes an information selection section for selecting from the information received by the reception section **505** a piece(s) of information to be displayed or reproduced; reference numeral **508** denotes a sound conversion section for converting the information received by the reception section **505** to a sound; reference numeral **507** denotes a small display for displaying information; and reference numeral **509** denotes a earphone **509** for reproducing the sound.

An operation of the wearable information notifying device according to this embodiment which has the above-described structure is described. Herein, details about the reproduction of music and the display of song information are the same as those described in embodiment 4. Further, herein assume that an emergency mail, or the like, is arrived at the information reception section **101** during reproduction of music. At this time, previously-set information is extracted from the arrived mail by the information extraction section **104**, and the extracted information is received by the reception section **505** through the transmission section **105**. In the case where reception of mails has priority over reproduction of music, the content of the mail received by the reception section **505** is selected by the information selection section **506**, and the display of the small display is changed to the content of the mail from the song information. The subsequent part of the process is the same as that of embodiment 1, and therefore, descriptions thereof are omitted.

With the above arrangement, information received from a plurality of devices can be selectively displayed on the small display in an integrated fashion. A user can control a plurality of devices or check the status of the plurality of devices through a single display only by setting the priority of information.

In this embodiment, the communication between the main component and the headset is established by a short-distance wireless, but according to the present invention, the communication may be established through other communication means, such as wired communication means, infrared communication means, etc.

### (Embodiment 6)

In the above-described embodiments, a small display is provided in front of an eye of a user. Therefore, if information is suddenly displayed on the small display, the user may be astonished at and upset about the sudden display. For example, there is a problem in safety if a notice of arrival of a mail, or the like, is suddenly displayed on the small display while the user wearing a headset is driving a car. Further, since the eyes of a user in a dimmed place, e.g., a public place, such as a movie theater, a museum, or the like, are adjusted to the dimness of his/her surroundings, it is difficult for the user to confirm information if the information is suddenly displayed with higher brightness on the small display provided in front of the eye of the user. Embodiment 6 of the present invention solves such problems.

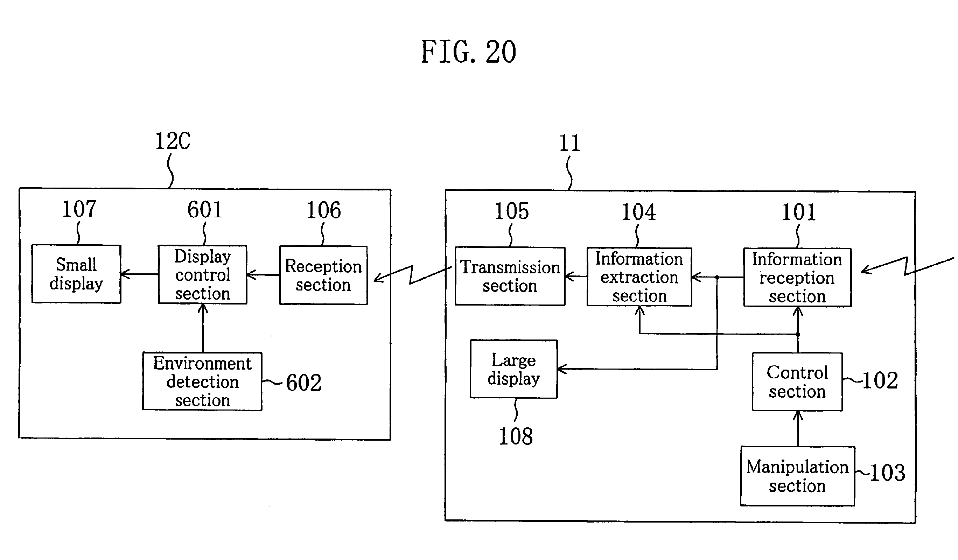

Figure **20** is a functional block diagram of a wearable information notifying device according this embodiment. In Figure **20**, like elements are denoted by like reference numerals used in Figure **3**, and therefore, detailed descriptions thereof are herein omitted. Embodiment **6** is different from embodiment 1 in that a headset **12C** includes a display control section **601** for controlling the display mode of the small display **107** according to a given control signal, and an environment detection section **602** for detecting the state of the environment around the headset **12C** to supply the control signal to the display control section **601** according to the detected environmental state.

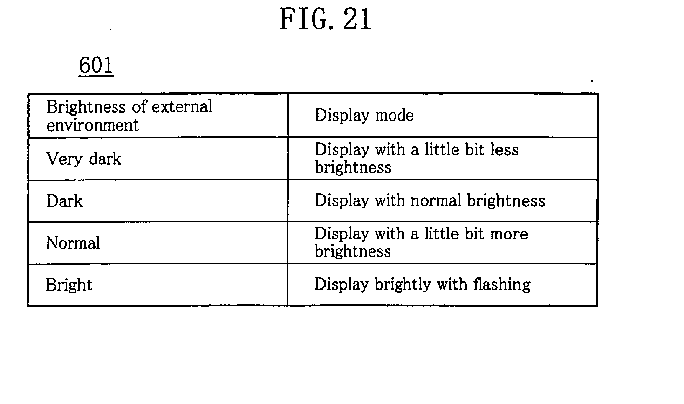

Herein, assume that the environment detection section **602** detects the brightness of the surroundings of the headset **12C**. The display control section **601** controls the brightness of the small display **107** according to the brightness detected by the environment detection section **602**. For example, the display control section **601** previously stores the table shown in Figure **21** and selects the display mode for the small display 107 according to the brightness of the surroundings which is detected by the environment detection section **602.** The other part of the operation is the same as that of embodiment 1.

In the case where the surroundings are dim, information is displayed according to the dimness of the surroundings. On the other hand, in the case where the surroundings are bright, information is displayed according to the brightness of the surroundings. With such a structure, the user can confirm the information without imposing a burden on his/her eyes.

It should be noted that the environment detection section **602** may be provided in the main component **11.**

Alternatively, the state of an environmental feature other than the brightness may be detected. For example, the noise of the surroundings may be detected by the environment detection section **602**. In general, a user is unlikely to notice externally-supplied information when the external noise is large. Therefore, when the external noise is large, information is displayed with higher brightness as compared with normal display, or a presented display is blinked, in order to surely notify the user about the information.

Alternatively, in the case where a large number of words uttered by a user are detected by the environment detection section **602**, it may be determined that the user is engaged in a conversation with somebody, and the timing of providing information may be delayed. With such an arrangement, information can be presented on the small display without inhibiting a communication of the user with somebody else.

Alternatively, a vibration may be detected by the environment detection section **602** using a gyro, or the like. In the case where it is determined from the pattern of the detected vibration that a user is walking or running, the timing of providing information may be delayed.

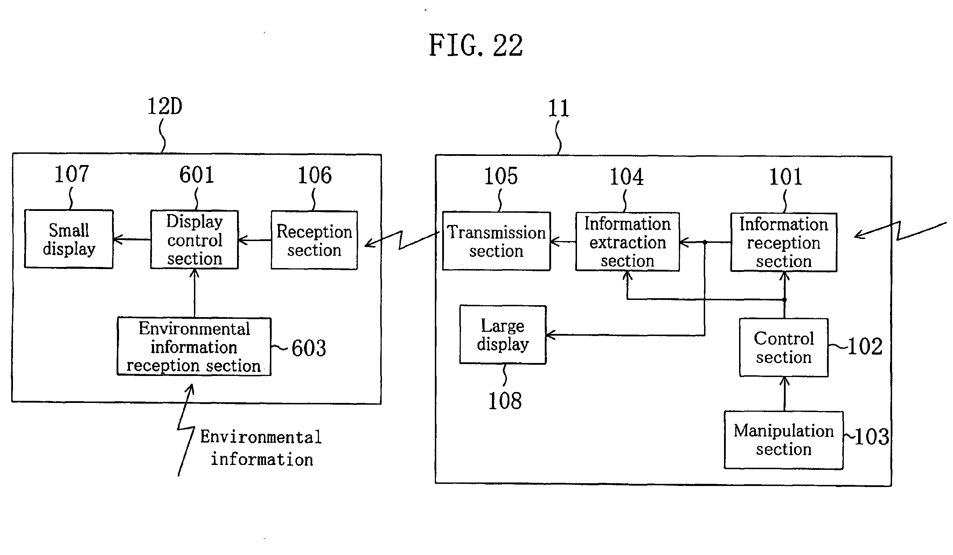

In the structure shown in Figure **20**, the environment detection section **602** is provided in the headset. Instead, environmental information detected by environment detection means which is provided outside the wearable information notifying device may be received by wireless or wired network, and the display mode of the small display **107** may be controlled according to the received environmental information. Figure **22** shows such a structure wherein an environmental information reception section **603**, which receives environmental information from outside and provides a control signal to the display control section **601** according to the received environmental information, is provided in place of the environment detection section **602** of Figure **20**.

Here, we consider a case where a user is driving a car, and the environmental information reception section **603** receives the current velocity of the car as the environmental information from a sensor of the car. Further, at step S17 of embodiment 1, the display control section **601** does not activate the small display **107** while the car is moving, but activates the small display **107** when the velocity of the car is decreased to zero or a sufficiently slow speed. With such an arrangement, the small display **107** is activated only when the velocity of the car is decreased and sufficient safety is secured. Thus, there is no problem in safety.

Further, not only the velocity of the car but also activation of a side brake or stoppage of an engine may be detected, and information may be displayed at such a timing.

Furthermore, by using information obtained from a GPS, or the like, or information obtained from a gyro, information to be displayed on the small display may be restricted, for example, when a user is moving (driving or walking).

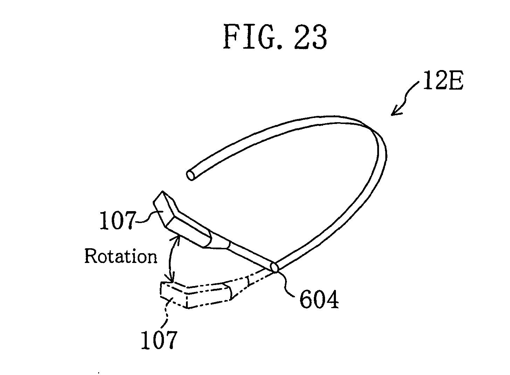

Furthermore, as shown in Figure **23**, a driving mechanism **604**, such as a small motor, may be provided for shifting the small display **107** between a position in front of an eye of a wearer and a position not in front of the eye of the wearer. With such a mechanism, for example, the small display **107** is provided in front of the eye only when there is information necessary for the user, but is removed out of the view field of the user when not so as not to block the view field of the user during his/her everyday life activity.

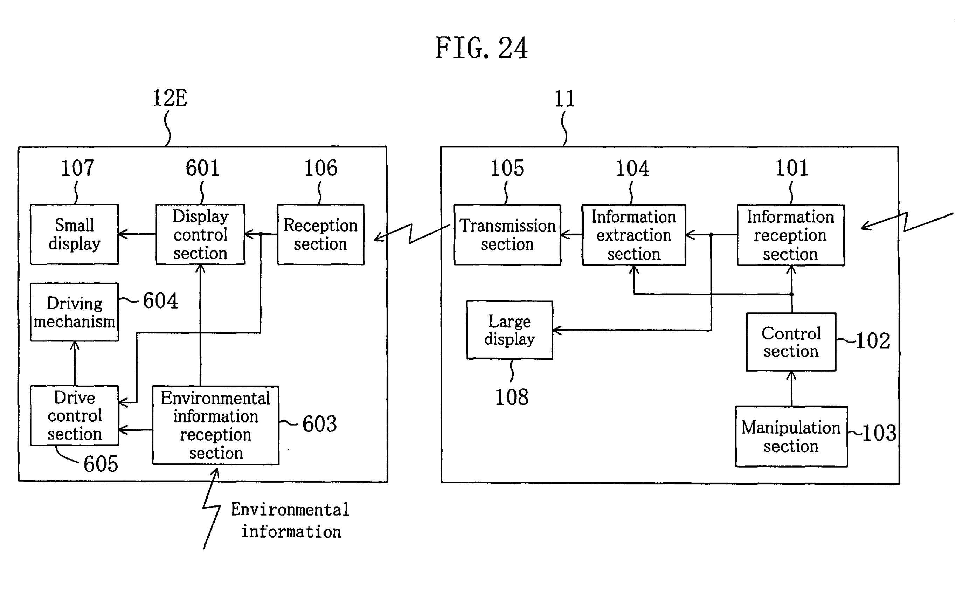

Figure **24** is a functional block diagram of a wearable information notifying device used in this example. According to the structure of Figure **24,** the headset **12E** includes a drive control section **605** for controlling the operation of the driving mechanism **604** according to information output from the information extraction section **104** and received by the reception section **106**. Further, the drive control section **605** controls the operation of the driving mechanism **604** while additionally considering the environmental information received by the environmental information reception section **603**.

Specifically, only when information necessary for the user is received and sufficient safety is secured even with provision of information to the user, the drive control section 605 drives the driving mechanism **604** to provide the small display **107** in front of the eye of the user. That is, when the user is driving a car, or the like, and there is not any particular information necessary for the user, the small display **107** is moved away from the position in front of the eye of the user such that the view field of the user is not blocked. Only when information necessary for the user is received, and sufficient safety is secured even with provision of information to the user (e.g., when the car is stopped), the small display **107** is provided in front of the eye of the user to present the information to the user.

That is, the headset having the small display described herein includes: the driving mechanism capable of shifting the small display between the position in front of the eye of the wearer and the position not in front of the eye of the wearer; the reception section for receiving information from outside and outputting the received information to the small display; and a drive control section for controlling the operation of the driving mechanism based on the information received by the reception section.

For example, whether or not the received information is necessary for the user may be determined as described below. A keyword related to an interest of the user, e.g., "professional baseball", is previously registered in the drive control section **605**. The driving mechanism **604** is set to operate when information related to the keyword "professional baseball" is received. With such an arrangement, the driving mechanism **604** is not activated when information related to a genre other than the "professional baseball", e.g., economy news, soccer, etc., is received, and the information is not presented to the user.

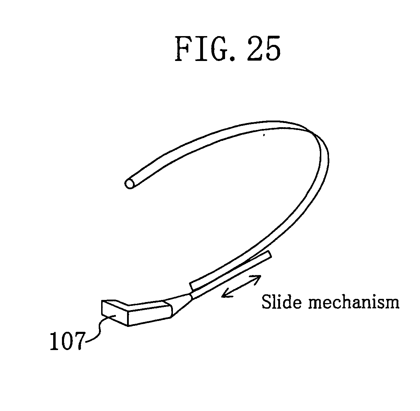

Further still, as shown in Figure **25**, the headset may be designed such that the small display 107 is slidable back and forth. With such a design, the headset may be adjusted for users having different head sizes.

### (Embodiment 7)

In embodiments 1-3 described above, when a mail from outside is arrived, a portion of information contained in the mail is displayed on a small display. However, the information to be displayed on the small display may be a content of a TV broadcast, such as news, or the like. In this case, there is a possibility that if the user concentrates too much on watching the content, understanding by the user of the state of his/her surroundings is delayed. For example, in the case where the user is watching a content displayed on the small display provided in front of the eye during his/her movement by a transportation service, such as train, bus, or the like, there is a possibility that the user may too much concentrate on the content to miss the station or bus stop of his/her destination. This embodiment was conceived in order to solve such a problem.

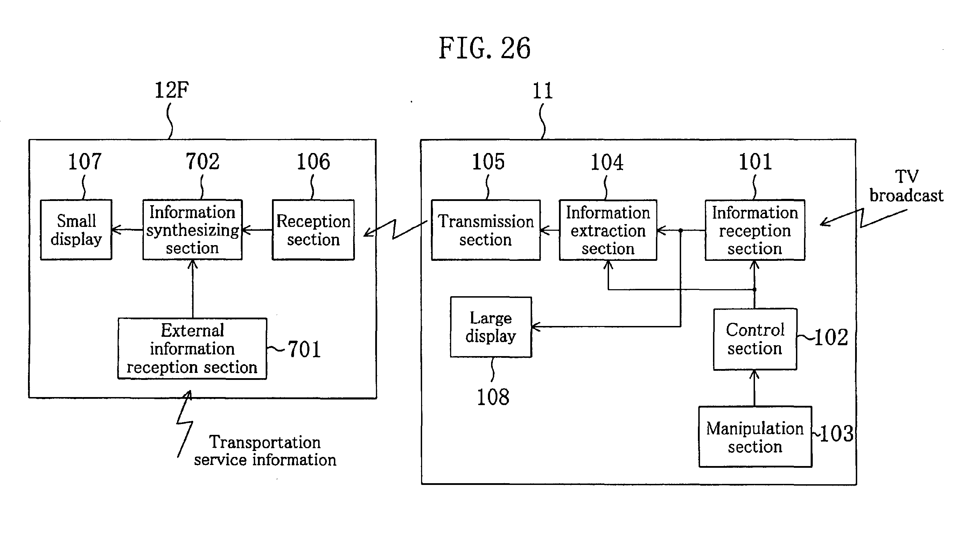

Figure **26** is a functional block diagram showing a structure of a wearable information notifying device according to this embodiment. In Figure **26**, a headset **12F** includes an external information reception section **701**, which is employed as a second information reception section, and an information synthesizing section **702**. The information synthesizing section **702** displays on the small display **107** first information, e.g., a TV broadcast program, which is received by the information reception section **101** employed as the first information reception section of the main component **11**. Further, when second information concerning the service status of the transportation service that the wearer currently uses, such as bus, train, or the like, is received by the external information reception section **701**, the information synthesizing section **702** synthesizes the second information with the first information and displays the synthesized information on the small display **107**.

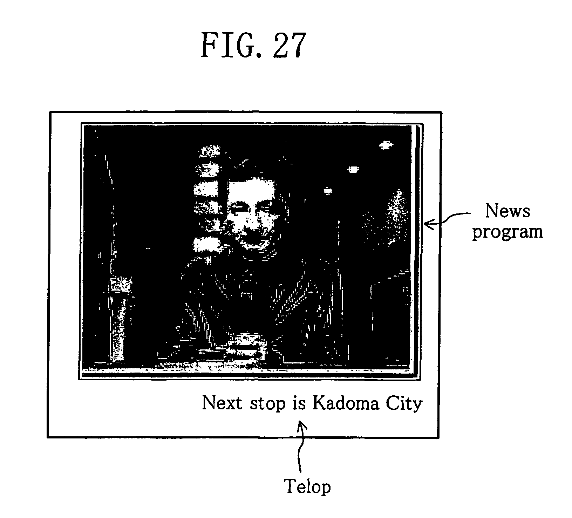

For example, as shown in Figure **27**, when information about arrival at a train station is obtained by the external information reception section **701** while a news program is displayed, the information is synthesized for display using a telop, or the like. With such an arrangement, even when the user concentrates too much on the information displayed on the small display **107** so that he/she misses hearing an in-train announcement, the user can confirm the content of the announcement through the small display **107**.

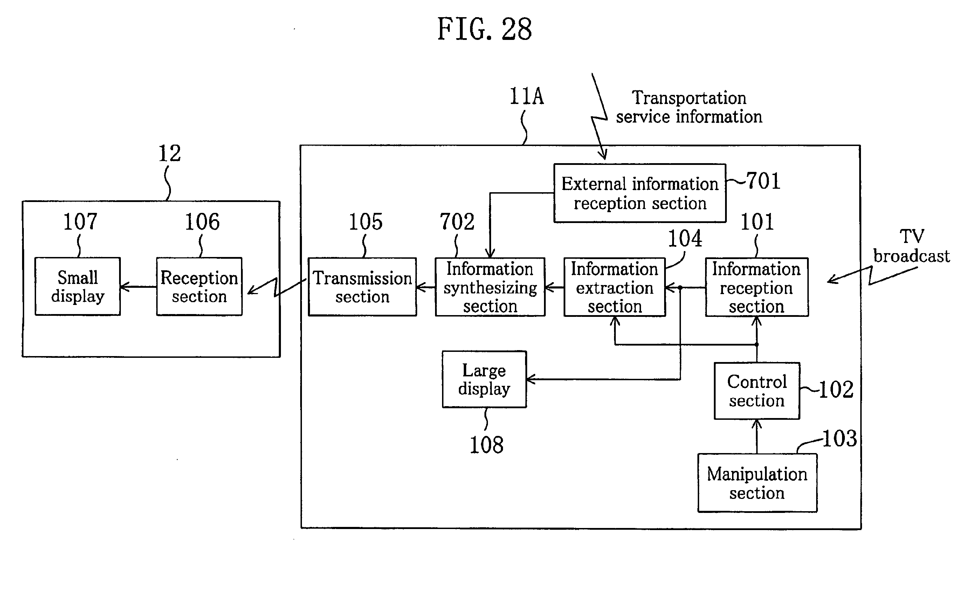

Further, as shown in Figure **28**, the external information reception section **701** and the information synthesizing section **702** may be provided in a main component **11A**.

That is, the wearable information notifying device described herein includes: a headset having a small display which can be provided in front of an eye of a wearer; a first information reception section which communicates with an external device to receive first information; a second information reception section which communicates with an external device to receive second information; and an information synthesizing section which displays the first information on the small display and which synthesizes the second information with the first information to display the synthesized information on the small display when the second information is received by the second information reception section.

It is preferable that the first information is a TV broadcast program, and the second information is information concerning the service status of the transportation service that the wearer utilizes.

### (Embodiment 8)

In Figures **1** and **2**, the small display **107** is fixed in front of an eye of a user with a supporting bar which is looped around the back of the head. However, the means for fixing the small display is not limited to this.

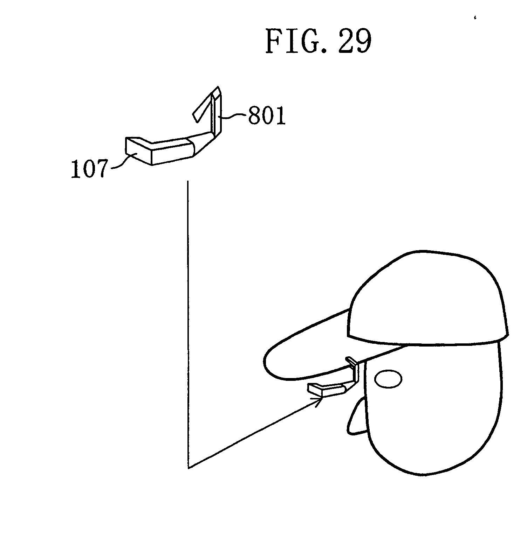

Figure **29** shows an arrangement where clip-like fixing means **801** is attached to the small display **107**. With the fixing means **801**, the small display **107** can be provided at a position where a user can easily view the small display **107** according to the place or situation where the user is in. For example, when the user is out of the door, the small display **107** can be attached to the brim of a cap, or the like. In one possible example, the user watches a game of an outdoor sport, such as a baseball game, but all the information provided to the main component of the communication device is not shown on the small display **107**. For example, the user previously selects the team he/she likes. According to this setting, information for batters is displayed on the small display **107** when the selected team plays offense, and information for the pitcher and field players is displayed on the small display **107** when the selected team plays defense.

In the case where the small display **107** is fixed using a horizontal supporting bar around the head as shown in Figures **1** and **2**, information can be confirmed by any one of the eyes. However, after intently watching the information provided on the small display **107**, the one eye may be fatigued. Further, when the face of the user moves in a vertical direction, the small display **107** accordingly swings in a vertical direction so that it becomes difficult for the user to confirm the information.

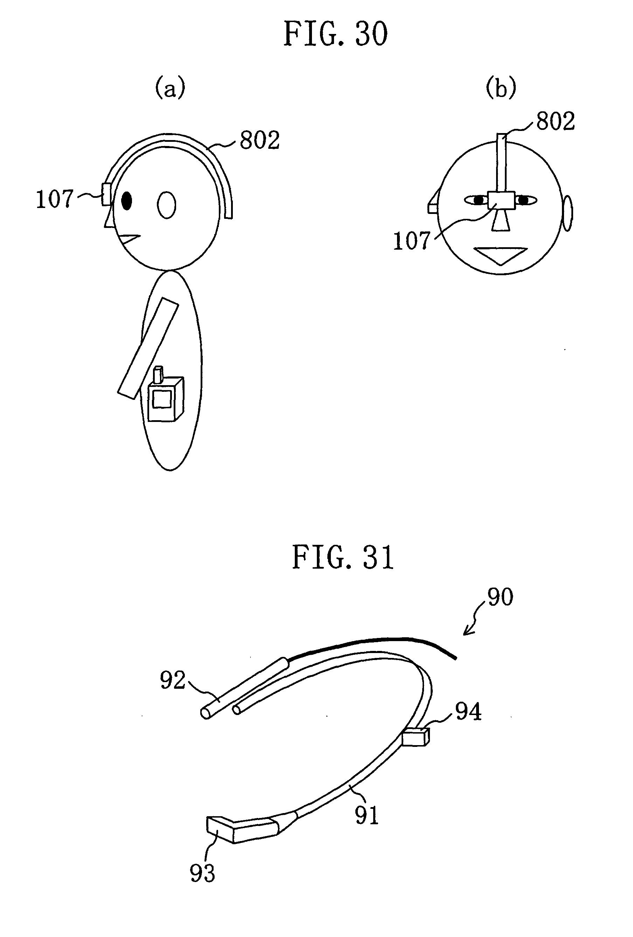

In order to eliminate such a problem, the small display **107** is fixed using a vertical supporting bar **802** provided over the head as shown in Figure **30**. With such an arrangement, information provided on the small display **107** can be confirmed by both of the eyes. Further, an undesirable swing of the small display **107**, which can be caused by a vertical movement of the head, is reduced.

### (Embodiment 9)

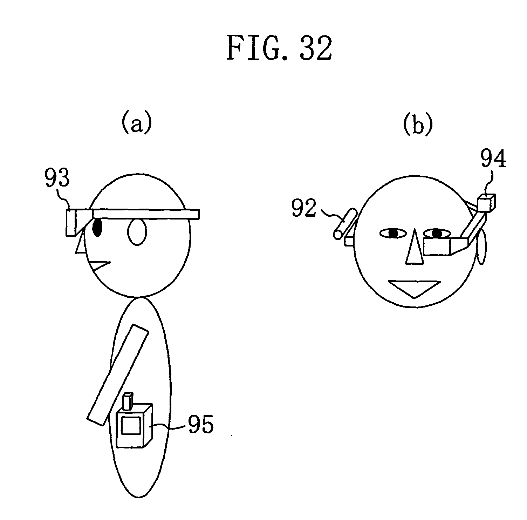

Figure **31** shows an exterior of a headset according to embodiment 9 of the present invention. Figure **32** shows a user who wears a wearable information notifying device including the headset of Figure **31**. The headset **90** shown in Figure **31** includes: a headband(Katyusha)-shape base member **91** which can be fixed around the head of a human such that it is looped around the back of the head from one side portion to the other side portion of the head; a camera **92** which is provided at one end of the base member **91**; and a small display **93** which is provided at the other end of the base member **91**. When the user wears the headset **90** by fixing the base member **91** to his/her head, the camera **92** can capture an image from an area in front of the user, and the small display **93** is provided in front of an eye of the user. Reference numeral **95** denotes a main component which communicates with an external device to receive information.

Further, the headset **90** of Figure **31** is designed for use with both of the eyes. That is, the small display **93** is provided in front of the left eye if the headset **90** shown in Figure **31** is worn as it is, but the small display **93** is provided in front of the right eye if the headset **90** shown in Figure **31** is worn upside down. Furthermore, the headset **90** includes an upside/downside detection section **94**, such as a gyro or mercury switch, for detecting the upside/downside of the headset **90**. It is possible to determine the upside/downside of an image shown on the small display **93** from a detection result of the upside/downside detection section **94**. Thus, the user can wear the headset **90** without especially considering the left side/right side of the headset **90**.

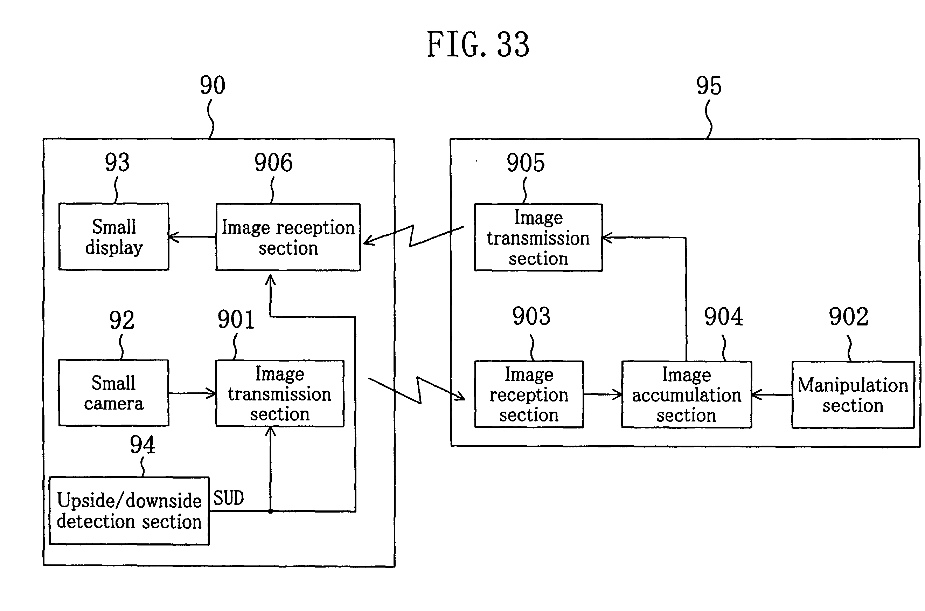

Figure **33** is a functional block diagram of a wearable information notifying device according to this embodiment. In Figure **33**, the small camera **92** provided to the headset **90** captures image information from an area at which a user is looking. The upside/downside detection section **94** detects the upside/downside of the headset **90** and outputs the detection result as an upside/downside signal **SUD**. The upside/downside signal **SUD** represents whether the position of the small camera **92** is at the right-hand side or left-hand side of the user and whether the position of the small display **93** is at the right-eye side or left-eye side of the user. An image transmission section **901** adds the upside/downside signal **SUD** to the image signal captured by the small camera **92** and transmits the resultant image signal.

In the main component **95**, an image reception section **903** receives the image signal transmitted from the image transmission section **901**, which includes the upside/downside signal **SUD** added thereto. An image accumulation section **904** accumulates the received image signal according to a manipulation of the manipulation section **902** by the user. At this step, the accumulation is performed while considering the upside/downside of the headset **90** which is represented by the upside/downside signal **SUD**. Specifically, when the upside/downside signal **SUD** represents that the headset **90** is worn upside down, the image signal is accumulated upside down. An image transmission section **905** transmits the image signal accumulated in the image accumulation section **904**. Even in the case where the image signal is not accumulated, the image transmission section **905** processes the image signal while considering the upside/downside represented by the upside/downside signal **SUD** and transmits the processed image.

In the headset **90,** an image reception section **906** receives the image signal transmitted from the image transmission section **905** and, on the other hand, receives the upside/downside signal **SUD** from the upside/downside detection section **94**. Then, the image reception section **906** determines the upside/downside of the received image signal and reproduces the image signal on the small display **93**. That is, when the upside/downside signal **SUD** represents that the headset **90** is worn upside down, the received image signal is displayed upside down on the small display **93**

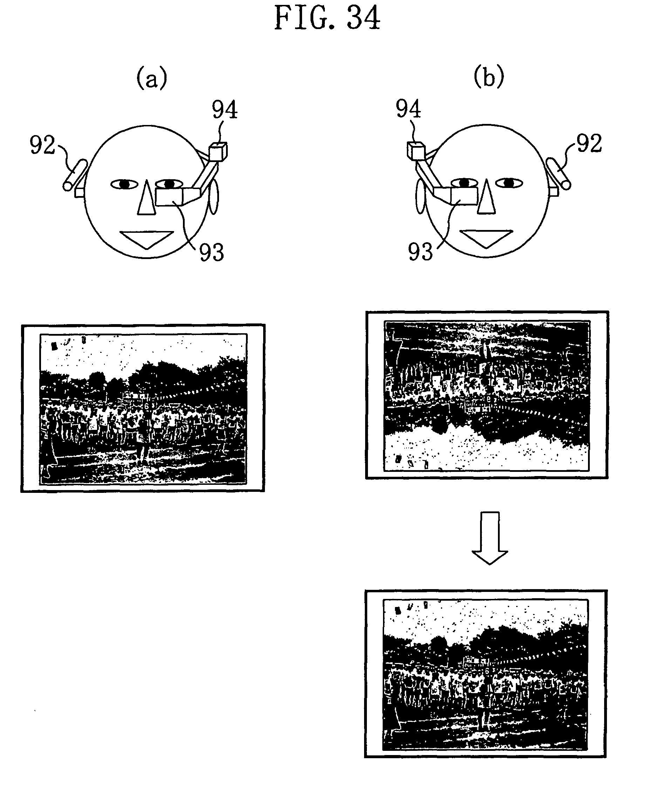

With such a feature, information is displayed on the small display **93** such that, as illustrated in Figure **34**, the user can always view the image with the right side up regardless of whether the headset **90** is worn for the left eye or the right eye. Further, in the case of accumulating the image, an image can be stored with the right side up for the user's view.

That is, the headset described herein includes: a headband-shape base member which can be fixed around the head of a human such that it is looped around the back of the head from one side portion to the other side portion of the head; a camera which is provided at one end of the base member and which can capture an image from an area in front of the user when the base member is fixed to the head; and a small display which is provided at the other end of the base member and which is provided in front of an eye of the human when the base member is fixed to the head.

Furthermore, the headset preferably includes: an upside/downside detection section which detects the upside/downside of the headset and outputs the detection result as an upside/downside signal; an image transmission section which adds the upside/downside signal output from the upside/downside detection section to the image signal captured by the camera and transmits the resultant image signal to an external device; an image reception section which receives an image signal from an external device and sets the upside/downside of the image signal according to the upside/downside signal output from the upside/downside detection section so as to be displayed on the small display.

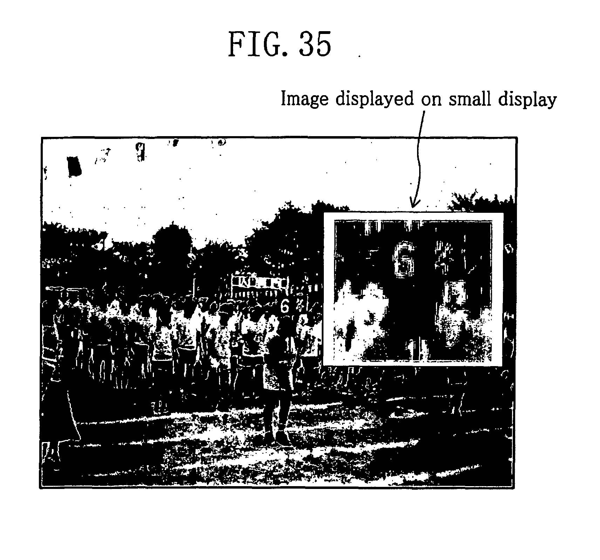

In the headset of this embodiment, the small display **93** is not provided such that it blocks all the view field of the user. Thus, an image captured by the small camera **92** is displayed on the small display **93** as shown in Figure **35**, whereby the user can confirm the captured image while confirming the state of his/her surroundings. Conventionally, in the case of capturing an image with a video camera, or the like, the head of the user moves for performing a task of confirming an area to which the camera is directed by viewing a liquid crystal screen and a task of confirming the state of his/her surroundings, and therefore in many cases, a camera shake occurs in the captured image. However, in the case of capturing an image using the headset of this embodiment, the user can confirm the captured image and the state of his/her surroundings at the same time only by changing his/her sightline. Thus, it is possible to reduce the camera shake in the captured image.

As described above, according to the present invention, arrival of a mail, music information, etc., is displayed on a display provided in front of an eye, whereby the information can be confirmed in a hands-free manner, and information obtained from a plurality of devices can be controlled in an integrated fashion. Furthermore, an indication of arrival of a mail is displayed on a wearable display, whereby the content of the mail can readily be confirmed without taking out a cellular phone. Thus, the user can instantly confirm arrival of the mail without being noticed by a person he/she faces, and in addition, can confirm other information, such as the degree of importance of the received mail, etc.

## Claims

1. A wearable information notifying device, comprising:
a headset having a small display which can be provided in front of an eye of a wearer;
an information reception section for communicating with an external device to receive information; and
an information extraction section for extracting a portion of the information received by the information reception section which is to be displayed on the small display.

2. The wearable information notifying device according to claim 1, further comprising a display for displaying the information received by the information reception section.

3. The wearable information notifying device according to claim 1, further comprising:
a transmission section for transmitting an output of the information extraction section by wireless; and
a reception section for receiving a transmission from the transmission section to output the received transmission to the small display.

4. The wearable information notifying device according to claim 1, wherein the information extraction section extracts information about a sender of the information received by the information reception section.

5. The wearable information notifying device according to claim 1, wherein the information extraction section extracts information about a degree of importance of the information received by the information reception section.

6. The wearable information notifying device according to claim 1, wherein the information extraction section extracts a keyword picked up from a sentence included in the information received by the information reception section.

7. The wearable information notifying device according to any one of claim 4-6, wherein the information extraction section outputs the extracted information together with predetermined color information added thereto.

8. The wearable information notifying device according to claim 2, wherein the information extraction section extracts color classification information which is set for a character string included in the information received by the information reception section.

9. The wearable information notifying device according to claim 1, wherein:
the headset includes an earphone; and
the wearable information notifying device includes a sound notifying section for outputting a sound signal to the earphone based on the information output from the information extraction section.

10. The wearable information notifying device according to claim 1, wherein:
the headset includes a vibrating section for providing a vibration; and
the wearable information notifying device includes a vibratory notification section for outputting a vibration signal to the vibrating section based on the information output from the information extraction section.

11. A wearable information notifying device, comprising:
a headset having a small display which can be provided in front of an eye of a wearer;
an information reproduction section for reproducing a media in which information is stored; and
an information extraction section for extracting a portion of the information reproduced by the information reproduction section which is to be displayed on the small display.

12. The wearable information notifying device according to claim 1, wherein the headset includes a display control section for controlling the display mode of the small display according to a given control signal.

13. The wearable information notifying device according to claim 12, wherein the display control section controls the brightness of the small display or controls whether or not to perform display on the small display.

14. The wearable information notifying device according to claim 12, further comprising an environment detection section for detecting an environmental state around the headset and supplying the control signal to the display control section according to the detected environmental state.

15. The wearable information notifying device according to claim 14, wherein the environment detection section detects the brightness of surroundings as the environmental state.

16. The wearable information notifying device according to claim 12, further comprising an environmental information reception section for receiving environmental information which represents an environmental state around the headset and supplying the control signal to the display control section according to the received environmental information.

17. The wearable information notifying device according to claim 16, wherein the environmental information reception section receives the velocity of a car driven by the human as the environmental information.

18. The wearable information notifying device according to claim 1, wherein the headset includes
a driving mechanism for shifting the small display between a position in front of the eye of the wearer and a position not in front of the eye of the wearer, and
a drive control section for controlling an operation of the driving mechanism based on the information output from the information extraction section.

19. The wearable information notifying device according to claim 18, further comprising an environmental information reception section for receiving environmental information which represents an environmental state around the headset and supplying the received environmental information to the drive control section,
wherein the drive control section controls the operation of the driving mechanism while additionally considering the environmental information.
